# EUROPEAN PATENT SPECIFICATION

(11) **EP 3 487 203 B1**
(45) Date of publication and mention of the grant of the patent: **16.12.2020**
(21) Application number: 16911242.2
(22) Date of filing: 05.08.2016
(51) Int. Cl.: H04W 16/28

(54) **TRANSMISSION METHOD AND APPARATUS FOR SOUNDING REFERENCE SIGNAL**
ÜBERTRAGUNGSVERFAHREN UND -VORRICHTUNG FÜR KLANGREFERENZSIGNAL
PROCÉDÉ ET APPAREIL D'ÉMISSION POUR SIGNAL DE RÉFÉRENCE DE SONDAGE

(43) Date of publication of application: 22.05.2019
(73) Proprietor: Huawei Technologies Co., Ltd., Longgang District Shenzhen, Guangdong 518129 (CN)
(72) Inventor: SUN, Xiaodong, Shenzhen Guangdong 518129 (CN); XU, Kai, Shenzhen Guangdong 518129 (CN); LIU, Bin, Shenzhen Guangdong 518129 (CN)
(74) Representative: Gill Jennings & Every LLP
(86) International application number: PCT/CN2016/093430
(87) International publication number: WO 2018/023646

(56) References cited:
- EP-A1- 2 552 169
- EP-A2- 2 940 885
- CN-A- 103 918 196
- CN-A- 103 945 541
- CN-A- 104 955 061
- CN-A- 105 453 629
- US-A1- 2014 211 731
- US-A1- 2016 197 659

## Description

### TECHNICAL FIELD

Embodiments of the present invention relate to the communications field, and more specifically, to a method and an apparatus for sending a sounding reference signal.

### BACKGROUND

In a wireless communications system, to improve transmission efficiency while ensuring transmission reliability, a network device usually estimates quality of a radio channel used for signal transmission, and determines a scheduling solution based on the quality of the radio channel. In a current wireless communications system, quality information of a radio channel is usually obtained by transmitting a sounding reference signal (Sounding Reference Signal, "SRS" for short). The network device sends a configuration parameter of the SRS to a terminal device. After receiving the configuration parameter of the SRS, the terminal device sends the SRS based on the configuration parameter, so that the network device may obtain quality of an uplink channel by measuring the SRS sent by the terminal device, and determine a final uplink scheduling solution. Particularly, in a time division duplex (Time Division Duplex, "TDD" for short) system, due to reciprocity of uplink and downlink channels, the network device may obtain the downlink channel by measuring the SRS sent by the terminal device, and assist in downlink service transmission.

In the prior art, each SRS is omnidirectionally sent by using a single antenna port. Because the sending manner does not have directivity, the sending manner not only limits coverage performance of the SRS but also causes interference between neighboring cells.

EP2940885 describes a multi-antenna transmission method, a terminal and a base station, wherein, an eNB sends a UE a SRS transmission mode including new SRS transmission port information and/or a signaling for instructing the UE to perform antenna group alternate transmission as well as a control signaling required by the SRS transmission mode; the UE transmits a SRS using the abovementioned SRS transmission mode, and the eNB estimates a channel information according to the SRS and calculates and transmits a preceding matrix.

US2016/0197659 describes transmitting configuration information for a reference signal to a terminal, performing a scrambling operation which multiplies the reference signal by a sequence on the basis of a beam group identifier for each of at least two beam groups set on a single cell, and transmitting the reference signal, to which the scrambling operation has been performed on the basis of the configuration information, to the terminal.

CN103945541 describes a kind of SRS of triggering signal to send, use downlink transmitting and dispatching signalling equipment for indicating user to send SRS signal.

EP2552169 describes a method for triggering the sending of SRS wherein a base station sends a downlink transmission scheduling signal to the user equipment (UE), wherein the signal carries the indication information for instructing the UE to send the SRS.

### SUMMARY

In view of this, embodiments of the present invention provide a method and an apparatus for sending a sounding reference signal, to effectively improve coverage performance of a sounding reference signal SRS, and reduce interference between neighboring cells.

According to a first aspect, a method for sending a sounding reference signal is provided. The method includes: determining, by a network device, configuration information of a first sounding reference signal, where the configuration information of the first sounding reference signal includes a beam configuration parameter of the first sounding reference signal, and the beam configuration parameter of the first sounding reference signal is used to instruct a terminal device to send the first sounding reference signal by using a first beam; and sending, by the network device, the configuration information of the first sounding reference signal to the terminal device.

Therefore, according to the method for sending a sounding reference signal in this embodiment of the present invention, the network device sends the configuration information including a beam-related parameter of the first sounding reference signal to the terminal device, so that the terminal device sends the first sounding reference signal directly based on the configuration information by using the first beam, thereby implementing sending the first sounding reference signal based on beamforming. Therefore, coverage performance of the sounding reference signal can be effectively improved, and interference between neighboring cells can be reduced, thereby improving user experience.

It should be understood that one sounding reference signal corresponds to one beam and therefore corresponds to one piece of configuration information. In addition, the sending, by the network device, the configuration information of the sounding reference signal is for configuring the sounding reference signal sent by the terminal device, and measuring corresponding channel quality based on the sounding reference signal sent by the terminal device. In addition to sending the configuration information of the first sounding reference signal to the terminal device, the network device may further send configuration information of another sounding reference signal to the terminal device. This is not limited in this embodiment of the present invention.

Moreover, in addition to the sounding reference signal, this embodiment of the present invention may further be applied to sending of another reference signal, for example, a demodulation reference signal (demodulation reference signal, "DMRS" for short) or another possible reference signal used for channel measurement in a future communications system. This is not limited in this embodiment of the present invention.

In a first possible implementation of the first aspect, the network device sends configuration information of each of at least one second sounding reference signal to the terminal device. The configuration information of each second sounding reference signal includes a beam configuration parameter of the second sounding reference signal, the beam configuration parameter of the second sounding reference signal is used to instruct the terminal device to send the second sounding reference signal by using a second beam corresponding to the second sounding reference signal, and the at least one second sounding reference signal and at least one second beam are in a one-to-one correspondence.

Specifically, the network device may send a configuration parameter of each of a plurality of sounding reference signals to the terminal device, to configure each sounding reference signal. In this manner, the configuration parameter of each sounding reference signal is determined and sent by the network device, so that a transmit beam configured in such a manner has a flexible sending direction.

With reference to the foregoing possible implementation of the first aspect, in a second possible implementation of the first aspect, the network device sends an identifier of a beam pattern to the terminal device. The identifier of the beam pattern is used to instruct the terminal device to send at least one third sounding reference signal by using at least one third beam in the beam pattern, and the at least one third sounding reference signal and the at least one third beam are in a one-to-one correspondence.

Specifically, the network device may send the identifier of the beam pattern to the terminal device, to instruct the terminal device to send the sounding reference signal by using the beam in the beam pattern. It should be understood that the network device and the terminal device may predetermine a plurality of beam patterns and an identifier of the beam pattern corresponding to each of the plurality of beam patterns. When configuring the sounding reference signal, the network device may directly send the identifier of one of the plurality of beam patterns, so that the terminal device may send the corresponding sounding reference signal by using a beam in the beam pattern corresponding to the identifier.

In this way, when a plurality of sounding reference signals need to be configured in a system, the network device only needs to send configuration information of one sounding reference signal and an identifier of a beam pattern to the terminal device, and the terminal device configures a beam in the beam pattern based on the identifier of the beam pattern by using the same configuration information, thereby effectively reducing signaling overheads for configuring the sounding reference signal.

With reference to the foregoing possible implementations of the first aspect, in a third possible implementation of the first aspect, the network device sends beam quantity indication information to the terminal device, and the beam quantity indication information is used to indicate a quantity of the third beams in the beam pattern that are used by the terminal device.

Specifically, the network device may further send the beam quantity indication information to the terminal device, to indicate the quantity of beams in the beam pattern used for the current sending. Because a channel strong correlation case may exist, all channels need to be measured but not all beams need to be sent. The network device may determine a quantity of beams that need to be sent, thereby reducing unnecessary signaling overheads.

It should be understood that the quantity indicated in the beam quantity indication information may be a maximum quantity of beams that the terminal device can send in a same time domain resource or a same frequency domain resource, or may be a quantity of transmit beams that is determined by the network device based on an actual network status or a status of a channel that needs to be measured. This is not limited in this embodiment of the present invention.

With reference to the foregoing possible implementations of the first aspect, in a fourth possible implementation of the first aspect, before the determining, by a network device, configuration information of a first sounding reference signal, the method further includes: determining, by the network device, the first beam based on a moving direction of the terminal device.

Before the determining, by a network device, configuration information of a first sounding reference signal, the method further includes: determining, by the network device, the first beam and the identifier of the beam pattern based on the moving direction of the terminal device.

Specifically, the network device may configure the beam pattern for the terminal device based on the moving direction of the terminal device. For example, the moving direction of the terminal device may be classified into a horizontal direction and a vertical direction. The horizontal direction may be understood as that the terminal device moves on the ground or a plane parallel to the ground. The vertical direction may be understood as that the terminal device moves on a plane perpendicular to the ground. For a terminal device, the terminal device may move along only the horizontal direction, or may move along only the vertical direction, or may move along both the horizontal direction and the vertical direction. Therefore, different beam patterns may be configured for the terminal device in different moving directions, so that the coverage performance of the sounding reference signal can be improved, and power consumption of the terminal device can be reduced.

With reference to the foregoing possible implementations of the first aspect, in a sixth possible implementation of the first aspect, the beam configuration parameter of the first sounding reference signal includes an identifier of a first resource that the first sounding reference signal occupies and/or an identifier of a first port that the first sounding reference signal occupies, and the first resource and/or the first port corresponds to the first beam.

It should be understood that the resource herein is a time frequency resource, and may be a specific time frequency resource in a physical resource block (Physical Resource Block, "PRB" for short). The terminal device may send a plurality of beams by using one physical resource block. Therefore, a time frequency resource in each physical resource block needs to be identified, thereby implementing one-to-one correspondence between the resource and the beam. In addition, the port and the beam are also in a one-to-one correspondence. For example, the first beam may be formed by sending the first sounding reference signal by the terminal device by using the first resource, so that the first beam corresponds to the first port.

With reference to the foregoing possible implementations of the first aspect, in a seventh possible implementation of the first aspect, the beam configuration parameter of the first sounding reference signal further includes an identifier of a precoding codebook of the first sounding reference signal.

With reference to the foregoing possible implementations of the first aspect, in an eighth possible implementation of the first aspect, the configuration information of the first sounding reference signal further includes a frequency domain configuration parameter of the first sounding reference signal and/or a time domain configuration parameter of the first sounding reference signal; the frequency domain configuration parameter of the first sounding reference signal includes at least one of a frequency domain start location of the first sounding reference signal, a frequency domain offset between neighboring sounding reference signals in frequency domain, and a bandwidth occupied by the first sounding reference signal in the frequency domain; and the time domain configuration parameter of the first sounding reference signal includes at least one of a time domain start location of the first sounding reference signal, a time domain offset between neighboring sounding reference signals in time domain, and a sending period of the first sounding reference signal.

It should be understood that the frequency domain start location and/or the time domain start location herein is used to configure a resource block used by the terminal device when the terminal device sends the first sounding reference signal. The time domain start location may be a time domain start subframe or a symbol identifier. The frequency domain offset and/or the time domain offset is used to configure a resource block used by the terminal device to send another beam after the terminal device obtains the beam pattern, and is used to indicate an offset between neighboring sounding reference signals in the frequency domain and/or the time domain.

Based on different configurations of the network device, the terminal device may send the sounding reference signal in a time division manner, or may send the sounding reference signal in a frequency division manner, or may send the sounding reference signal in a manner of mixing time division and frequency division.

With reference to the foregoing possible implementations of the first aspect, in a ninth possible implementation of the first aspect, the configuration information of the first sounding reference signal further includes an identifier of an antenna panel used by the first sounding reference signal.

According to a second aspect, another method for sending a sounding reference signal is provided. The method includes: receiving, by a terminal device, configuration information of a first sounding reference signal that is sent by a network device, where the configuration information of the first sounding reference signal includes a beam configuration parameter of the first sounding reference signal, and the beam configuration parameter of the first sounding reference signal is used to instruct the terminal device to send the first sounding reference signal by using a first beam; and sending, by the terminal device, the first sounding reference signal based on the configuration information of the first sounding reference signal by using the first beam.

Therefore, according to the method for sending a sounding reference signal in this embodiment of the present invention, the network device sends the configuration information including a beam-related parameter of the first sounding reference signal to the terminal device, so that the terminal device sends the first sounding reference signal directly based on the configuration information by using the first beam, thereby implementing sending the first sounding reference signal based on beamforming. Therefore, coverage performance of the sounding reference signal can be effectively improved, and interference between neighboring cells can be reduced, thereby improving user experience.

In a first possible implementation of the second aspect, the method further includes: receiving, by the terminal device, configuration information of each of at least one second sounding reference signal that is sent by the network device, where the configuration information of each second sounding reference signal includes a beam configuration parameter of the second sounding reference signal, the beam configuration parameter of the second sounding reference signal is used to instruct the terminal device to send the second sounding reference signal by using a second beam corresponding to the second sounding reference signal, and the at least one second sounding reference signal and at least one second beam are in a one-to-one correspondence; and sending, by the terminal device, the at least one second sounding reference signal based on the configuration information of the second sounding reference signal by using the at least one second beam.

With reference to the foregoing possible implementation of the second aspect, in a second possible implementation of the second aspect, the method further includes: receiving, by the terminal device, an identifier of a beam pattern that is sent by the network device, where the identifier of the beam pattern is used to instruct the terminal device to send at least one third sounding reference signal by using at least one third beam in the beam pattern, and the at least one third sounding reference signal and the at least one third beam are in a one-to-one correspondence; determining, by the terminal device, the at least one third beam based on the identifier of the beam pattern; and sending, by the terminal device, the at least one third sounding reference signal based on the configuration information of the first sounding reference signal by using the at least one third beam.

With reference to the foregoing possible implementations of the second aspect, in a third possible implementation of the second aspect, before the sending, by the terminal device, the at least one third sounding reference signal based on the configuration information of the first sounding reference signal by using the at least one third beam, the method further includes: receiving, by the terminal device, beam quantity indication information sent by the network device, where the beam quantity indication information is used to indicate a quantity of the third beams in the beam pattern that are used by the terminal device; and the sending, by the terminal device, the at least one third sounding reference signal based on the configuration information of the first sounding reference signal by using the at least one third beam includes: sending, by the terminal device, the quantity of third sounding reference signals based on the configuration information of the first sounding reference signal and the beam quantity indication information by using the quantity of the third beams.

With reference to the foregoing possible implementations of the second aspect, in a fourth possible implementation of the second aspect, the beam configuration parameter of the first sounding reference signal includes an identifier of a first resource that the first sounding reference signal occupies and/or an identifier of a first port that the first sounding reference signal occupies, and the first resource and/or the first port corresponds to the first beam; and the sending, by the terminal device, the first sounding reference signal based on the configuration information of the first sounding reference signal by using the first beam includes: sending, by the terminal device, the first sounding reference signal based on the identifier of the first resource and/or the identifier of the first port by using the first resource and/or the first port.

With reference to the foregoing possible implementations of the second aspect, in a fifth possible implementation of the second aspect, the beam configuration parameter of the first sounding reference signal further includes an identifier of a precoding codebook of the first sounding reference signal; and the sending, by the terminal device, the first sounding reference signal based on the configuration information of the first sounding reference signal by using the first beam includes: encoding, by the terminal device, the first sounding reference signal based on the identifier of the precoding codebook by using the precoding codebook, and sending the encoded first sounding reference signal by using the first beam.

With reference to the foregoing possible implementations of the second aspect, in a sixth possible implementation of the second aspect, the configuration information of the first sounding reference signal further includes a frequency domain configuration parameter of the first sounding reference signal and/or a time domain configuration parameter of the first sounding reference signal; the frequency domain configuration parameter of the first sounding reference signal includes at least one of a frequency domain start location of the first sounding reference signal, a frequency domain offset between neighboring sounding reference signals in frequency domain, and a bandwidth occupied by the first sounding reference signal in the frequency domain; and the time domain configuration parameter of the first sounding reference signal includes at least one of a time domain start location of the first sounding reference signal, a time domain offset between neighboring sounding reference signals in time domain, and a sending period of the first sounding reference signal.

With reference to the foregoing possible implementations of the second aspect, in a seventh possible implementation of the second aspect, the configuration information of the first sounding reference signal further includes an identifier of an antenna panel used by the first sounding reference signal; and the sending, by the terminal device, the first sounding reference signal based on the configuration information of the first sounding reference signal by using the first beam includes: sending, by the terminal device, the first sounding reference signal based on the identifier of the antenna panel and the configuration information of the first sounding reference signal by using the antenna panel and the first beam.

According to a third aspect, an apparatus for sending a sounding reference signal is provided. The apparatus is configured to perform the method according to the first aspect or any possible implementation of the first aspect. Specifically, the apparatus includes units configured to perform the method according to the first aspect or any possible implementation of the first aspect.

According to a fourth aspect, an apparatus for sending a sounding reference signal is provided. The apparatus is configured to perform the method according to the second aspect or any possible implementation of the second aspect. Specifically, the apparatus includes units configured to perform the method according to the second aspect or any possible implementation of the second aspect.

According to a fifth aspect, an apparatus for sending a sounding reference signal is provided. The apparatus includes a receiver, a transmitter, a memory, a processor, and a bus system. The receiver, the transmitter, the memory, and the processor are connected to each other by using the bus system. The memory is configured to store an instruction. The processor is configured to execute the instruction stored in the memory, to control the receiver to receive a signal, and to control the transmitter to send a signal. In addition, when the processor executes the instruction stored in the memory, the execution causes the processor to perform the method according to the first aspect or any possible implementation of the first aspect.

According to a sixth aspect, an apparatus for sending a sounding reference signal is provided. The apparatus includes a receiver, a transmitter, a memory, a processor, and a bus system. The receiver, the transmitter, the memory, and the processor are connected to each other by using the bus system. The memory is configured to store an instruction. The processor is configured to execute the instruction stored in the memory, to control the receiver to receive a signal, and to control the transmitter to send a signal. In addition, when the processor executes the instruction stored in the memory, the execution causes the processor to perform the method according to the second aspect or any possible implementation of the second aspect.

According to a seventh aspect, a system for sending a sounding reference signal is provided. The system includes the apparatus according to the third aspect or any possible implementation of the third aspect and the apparatus according to the fourth aspect or any possible implementation of the fourth aspect; or
the system includes the apparatus according to the fifth aspect or any possible implementation of the fifth aspect and the apparatus according to the sixth aspect or any possible implementation of the sixth aspect.

According to an eighth aspect, a computer readable medium is provided. The computer readable medium is configured to store a computer program. The computer program includes an instruction used to perform the method according to the first aspect or any possible implementation of the first aspect.

According to a ninth aspect, a computer readable medium is provided. The computer readable medium is configured to store a computer program. The computer program includes an instruction used to perform the method according to the second aspect or any possible implementation of the second aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a communications system to which an embodiment of the present invention is applied;
FIG. 2 is a schematic flowchart of a method for sending a sounding reference signal according to an embodiment of the present invention;
FIG. 3 is a schematic beam diagram of a method for sending a sounding reference signal according to an embodiment of the present invention;
FIG. 4 is a schematic diagram of sending a sounding reference signal by occupying different resources according to an embodiment of the present invention;
FIG. 5 is a schematic diagram of sending sounding reference signals by occupying different ports according to an embodiment of the present invention;
FIG. 6 is a schematic diagram of sending a sounding reference signal in a time division manner according to an embodiment of the present invention;
FIG. 7 is a schematic diagram of sending a sounding reference signal in a frequency division manner according to an embodiment of the present invention;
FIG. 8 is a schematic diagram of sending a sounding reference signal in a manner of mixing time division and frequency division according to an embodiment of the present invention;
FIG. 9 is a schematic diagram of an antenna panel according to an embodiment of the present invention;
FIG. 10 is a schematic block diagram of an apparatus for sending a sounding reference signal according to an embodiment of the present invention;
FIG. 11 is a schematic block diagram of another apparatus for sending a sounding reference signal according to an embodiment of the present invention;
FIG. 12 is a schematic block diagram of another apparatus for sending a sounding reference signal according to an embodiment of the present invention; and
FIG. 13 is a schematic block diagram of another apparatus for sending a sounding reference signal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions in the embodiments of the present invention may be applied to various communications systems, such as a Global System for Mobile Communications (Global System of Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, an LTE time division duplex (Time Division Duplex, TDD) system, a Universal Mobile Telecommunications System (Universal Mobile Telecommunications System, UMTS), a Worldwide Interoperability for Microwave Access (Worldwide Interoperability for Microwave Access, WiMAX) communications system, and a future 5G communications system.

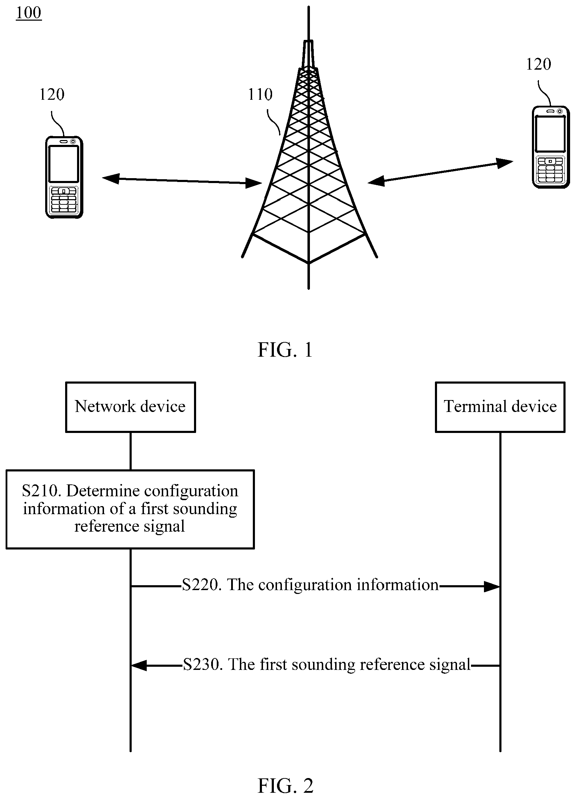

FIG. 1 shows a communications system 100 to which an embodiment of the present invention is applied. The communications system 100 may include at least one network device 110. The network device 100 may be a device, such as a base station or a base station controller, communicating with a terminal device. Each network device 100 may provide communication coverage to a particular geographic area, and may communicate with a terminal device (such as UE) located in the coverage (cell). The network device 100 may be a base transceiver station (Base Transceiver Station, "BTS" for short) in a GSM system or a Code Division Multiple Access (Code Division Multiple Access, "CDMA" for short) system, or may be a NodeB (NodeB, "NB" for short) in a WCDMA system, or may be an evolved NodeB (Evolutional Node B, "eNB" or "eNodeB" for short) in an LTE system, or a wireless controller in a cloud radio access network (Cloud Radio Access Network, "CRAN" for short). Alternatively, the network device may be a relay node, an access point, an in-vehicle device, a wearable device, a network-side device in a future 5G network, a network device in a future evolved public land mobile network (Public Land Mobile Network, "PLMN" for short), or the like.

The wireless communications system 100 further includes a plurality of terminal devices 120 located within the coverage of the network device 110. The terminal device 120 may be movable or fixed. The terminal device 120 may be an access terminal, user equipment (User Equipment, "UE" for short), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, a terminal device in a future 5G network, a terminal device in a future evolved public land mobile network (Public Land Mobile Network, "PLMN" for short), or the like.

FIG. 1 shows one network device and two terminal devices as an example. Optionally, the communications system 100 may include a plurality of network devices, and coverage of each network device may include another quantity of terminal devices. This is not limited in this embodiment of the present invention.

Optionally, the wireless communications system 100 may further include another network entity such as a network controller or a mobility management entity. This embodiment of the present invention is not limited thereto.

With development of communications technologies, a communications system has increasingly high requirements on a data transmission rate and a system bandwidth, so that there are increasingly more antennas deployed at a network device side and a terminal device side. With increasing of a system frequency, a wavelength becomes shorter and an antenna size becomes smaller, so that it is possible to implement large-scale commercial use of a plurality of antennas at the terminal device side. When a plurality of antennas are used both at the network device and the terminal device, sounding reference signals may be received and sent based on beamforming, so that significant improvements on parameters such as uplink coverage performance, a cell average throughput, and an edge user rate are ensured.

FIG. 2 is a schematic flowchart of a method 200 for sending a sounding reference signal according to an embodiment of the present invention. The method 200 may be applied to the communications system 100 shown in FIG. 1. However, this embodiment of the present invention is not limited thereto.

S210: A network device determines configuration information of a first sounding reference signal, where the configuration information of the first sounding reference signal includes a beam configuration parameter of the first sounding reference signal, and the beam configuration parameter of the first sounding reference signal is used to instruct the terminal device to send the first sounding reference signal by using a first beam.

S220: The network device sends the configuration information of the first sounding reference signal to the terminal device.

S230: The terminal device receives the configuration information of the first sounding reference signal that is sent by the network device, and sends the first sounding reference signal based on the configuration information.

Specifically, the network device may send the configuration information of the first sounding reference signal to the terminal device. The configuration information includes the beam configuration parameter, to instruct the terminal device to send the first sounding reference signal through beamforming. One sounding reference signal corresponds to one piece of configuration information and is used by the terminal device for configuration based on the configuration information, to send a corresponding sounding reference signal on a corresponding beam.

In a wireless communications system, to improve transmission efficiency while ensuring transmission reliability, the network device usually estimates quality of a radio channel used for signal transmission, and determines a scheduling solution based on the quality of the radio channel. If the estimated quality of the radio channel is relatively good, a scheduling solution with relatively high efficiency is used; or if the estimated quality of the radio channel is relatively poor, a scheduling solution with relatively low transmission efficiency and usually relatively high reliability is used. In a current wireless communications system, quality information of a radio channel is usually obtained by transmitting a reference signal. For example, in an uplink transmission process of an LTE system, the network device sends a configuration parameter of a sounding reference signal to the terminal device, and after receiving the configuration parameter of the sounding reference signal, the terminal device sends the sounding reference signal based on the configuration parameter, so that the network device may obtain quality of an uplink channel by measuring the sounding reference signal sent by the terminal device, and determine a final uplink scheduling solution. Particularly, in a TDD system, due to reciprocity of uplink and downlink channels, the network device may further obtain status information of the downlink channel by measuring the sounding reference signal sent by the terminal device, and assist in downlink data transmission. However, in the prior art, each sounding reference signal is omnidirectionally sent by using a single antenna port. Because the sending manner does not have directivity, the sending manner not only limits coverage performance of the sounding reference signal but also causes interference between neighboring cells.

Therefore, according to the method for sending a sounding reference signal in this embodiment of the present invention, the network device sends the configuration information including a beam-related parameter of the first sounding reference signal to the terminal device, so that the terminal device sends the first sounding reference signal directly based on the configuration information by using the first beam, thereby implementing sending the first sounding reference signal based on beamforming. Therefore, coverage performance of the sounding reference signal can be effectively improved, and interference between neighboring cells can be reduced, thereby improving user experience.

It should be understood that the sending, by the network device, the configuration information of the sounding reference signal is for configuring the sounding reference signal sent by the terminal device, and measuring corresponding channel quality based on the sounding reference signal sent by the terminal device. In addition to sending the configuration information of the first sounding reference signal to the terminal device, the network device may further send configuration information of another sounding reference signal to the terminal device. This is not limited in this embodiment of the present invention.

Moreover, it should be understood that, in addition to the sounding reference signal, this embodiment of the present invention may further be applied to sending of another reference signal, for example, a demodulation reference signal (demodulation reference signal, "DMRS" for short) or another possible reference signal used for channel measurement in a future communications system. This is not limited in this embodiment of the present invention.

In an optional embodiment, the method further includes:
sending, by the network device, configuration information of each of at least one second sounding reference signal to the terminal device, where the configuration information of each second sounding reference signal includes a beam configuration parameter of the second sounding reference signal, the beam configuration parameter of the second sounding reference signal is used to instruct the terminal device to send the second sounding reference signal by using a second beam corresponding to the second sounding reference signal, and the at least one second sounding reference signal and at least one second beam are in a one-to-one correspondence; and
receiving, by the terminal device, the configuration information of each of the at least one second sounding reference signal that is sent by the network device, and sending the at least one second sounding reference signal based on the configuration information of the second sounding reference signal by using the at least one second beam.

Specifically, the network device may send a configuration parameter of each of a plurality of sounding reference signals to the terminal device, to configure each sounding reference signal. In this manner, the configuration parameter of each sounding reference signal is determined and sent by the network device, so that a transmit beam configured in such a manner has a flexible sending direction.

In an optional embodiment, the method further includes:
sending, by the network device, an identifier of a beam pattern to the terminal device, where the identifier of the beam pattern is used to instruct the terminal device to send at least one third sounding reference signal by using at least one third beam in the beam pattern, and the at least one third sounding reference signal and the at least one third beam are in a one-to-one correspondence;
receiving, by the terminal device, the identifier of the beam pattern that is sent by the network device, and determining the at least one third beam based on the identifier of the beam pattern; and
sending, by the terminal device based on the configuration information of the first sounding reference signal, the at least one third sounding reference signal by using the at least one third beam.

Specifically, the network device may send the identifier of the beam pattern to the terminal device, to instruct the terminal device to send the sounding reference signal by using the beam in the beam pattern. It should be understood that the network device and the terminal device may predetermine a plurality of beam patterns and an identifier of the beam pattern corresponding to each of the plurality of beam patterns. When configuring the sounding reference signal, the network device may directly send the identifier of one of the plurality of beam patterns, so that the terminal device may send the corresponding sounding reference signal by using a beam in the beam pattern corresponding to the identifier. For example, in a specific implementation, the identifier of the beam pattern is shown in the following table.

| Identifier of a beam pattern | Beam distance |
|---|---|
| 0 | (*d_{H}*,0) |
| 1 | (0,*d_{V}*) |
| 2 | (*d_{H}*,*d_{V}*) |
| ... | ... |

In a specific implementation, the network device may configure the beam pattern for the terminal device based on the moving direction of the terminal device. For example, the moving direction of the terminal device may be classified into a horizontal direction and a vertical direction. The horizontal direction may be understood as that the terminal device moves on the ground or a plane parallel to the ground. The vertical direction may be understood as that the terminal device moves on a plane perpendicular to the ground. For a terminal device, the terminal device may move along only the horizontal direction, or may move along only the vertical direction, or may move along both the horizontal direction and the vertical direction. As shown in the foregoing table, if the terminal device moves along the horizontal direction, the network device may send a beam pattern whose identifier is 0, that is, configure, for the terminal device, beams whose beam distance is (*d_{H},*0)*.* If the terminal device moves along the vertical direction, the network device may send a beam pattern whose identifier is 1, that is, configure, for the terminal device, beams whose beam distance is (0,*d_{V}*). If the terminal device moves along both the horizontal direction and the vertical direction, the network device may send a beam pattern whose identifier is 2, that is, configure, for the terminal device, beams whose beam distance is (*d_{H},d_{V}*). It should be understood that the beam pattern may alternatively be identified in another manner, for example, by using a binary bit string or another character. This is not limited in this embodiment of the present invention.

In this embodiment of the present invention, after receiving the identifier of the beam pattern, the terminal device may determine the at least one third beam in the beam pattern based on the identifier of the beam pattern, configure the at least one third sounding reference signal by using the configuration information of the first sounding reference signal, and send the at least one third sounding reference signal by using the at least one third beam.

In this way, when a plurality of sounding reference signals need to be configured in the system, the network device only needs to send configuration information of one sounding reference signal and an identifier of a beam pattern to the terminal device, and the terminal device configures a beam in the beam pattern based on the identifier of the beam pattern by using the same configuration information, thereby effectively reducing signaling overheads for configuring the sounding reference signal.

In an optional embodiment, the method further includes:
sending, by the network device, beam quantity indication information to the terminal device, where the beam quantity indication information is used to indicate a quantity of the third beams in the beam pattern that are used by the terminal device; and
the sending, by the terminal device based on the configuration information of the first sounding reference signal, the at least one third sounding reference signal by using the at least one third beam includes:
   receiving, by the terminal device, the beam quantity indication information sent by the network device, and sending, by the terminal device, the quantity of third sounding reference signals based on the configuration information of the first sounding reference signal and the beam quantity indication information by using the quantity of the third beams.

Specifically, the network device may further send the beam quantity indication information to the terminal device, to indicate the quantity of beams in the beam pattern used for the current sending. Because a channel strong correlation case may exist, all channels need to be measured but not all beams need to be sent. The network device may determine a quantity of beams that need to be sent, thereby reducing unnecessary signaling overheads.

It should be understood that the quantity indicated in the beam quantity indication information may be a maximum quantity of beams that the terminal device can send in a same time domain resource or a same frequency domain resource, or may be a quantity of transmit beams that is determined by the network device based on an actual network status or a status of a channel that needs to be measured. This is not limited in this embodiment of the present invention.

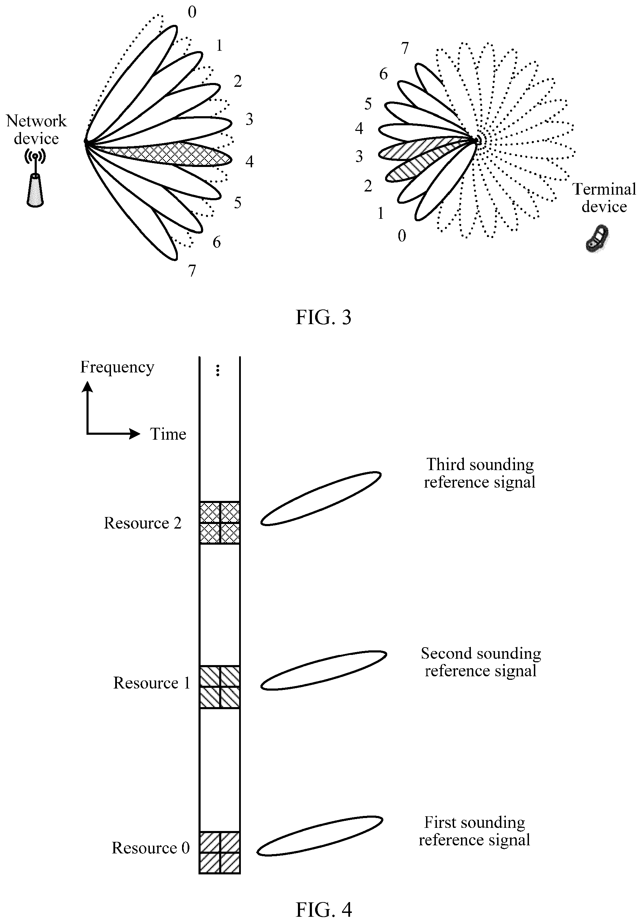

FIG. 3 is a schematic beam diagram of the method for sending a sounding reference signal according to an embodiment of the present invention. In FIG. 3, a plurality of antennas are used both at the network device and the terminal device. Therefore, sounding reference signals are received and sent by using a beamforming technology. After establishing initial uplink and downlink synchronization, the network device may determine a correspondence between a transmit beam and an optimal receive beam. Therefore, the network device instructs, by using the configuration information, the terminal device to send a sounding reference signal on at least one transmit beam, so that the network device may receive the sounding reference signal on an optimal receive beam corresponding to the at least one transmit beam. Using FIG. 3 as an example, if the terminal device sends a sounding reference signal by using a beam 2 and a beam 3, the network device may receive the sounding reference signal by using an optimal receive beam 4.

In an optional embodiment, the beam configuration parameter of the first sounding reference signal includes an identifier of a first resource that the first sounding reference signal occupies and/or an identifier of a first port that the first sounding reference signal occupies, and the first resource and/or the first port corresponds to the first beam; and
the sending, by the terminal device based on the configuration information of the first sounding reference signal, the first sounding reference signal by using the first beam includes:
sending, by the terminal device, the first sounding reference signal based on the identifier of the first resource and/or the identifier of the first port by using the first resource and/or the first port.

Specifically, the beam configuration parameter sent by the network device to the terminal device may include the identifier of the first resource and/or the identifier of the first port that the first sounding reference signal occupies. In this way, the terminal device may send the first sounding reference signal by using the first resource and/or the first port.

It should be understood that the resource herein is a time frequency resource, and may be a specific time frequency resource in a physical resource block (Physical Resource Block, "PRB" for short). The PRB corresponds to several consecutive carries in frequency domain, and the PRB is a resource in a timeslot in time domain. The terminal device may send a plurality of beams by using one physical resource block. Therefore, a time frequency resource in each physical resource block needs to be identified, thereby implementing one-to-one correspondence between the resource and the beam.

In addition, the port and the beam are also in a one-to-one correspondence. For example, the first beam may be formed by sending the first sounding reference signal by the terminal device by using the first resource, so that the first beam corresponds to the first port. It should be further understood that the antenna port is a logical concept and does not correspond one-to-one to a physical antenna. The antenna port and the sounding reference signal are in a one-to-one correspondence. If a same sounding reference signal is transmitted by using a plurality of physical antennas, these physical antennas correspond to a same antenna port. However, if two different sounding reference signals are transmitted from a same physical antenna, the physical antenna corresponds to two independent antenna ports.

FIG. 4 is a schematic diagram of sending a sounding reference signal by occupying different resources according to an embodiment of the present invention. In FIG. 4, the network device instructs the terminal device to send the first sounding reference signal by occupying a resource 0, send the second sounding reference signal by occupying a resource 1, and send the third sounding reference signal by occupying a resource 2. Therefore, the identifier of the resource in the configuration information of the first sounding reference signal is 0, an identifier of a resource in the configuration information of the second sounding reference signal is 1, and an identifier of a resource in configuration information of the third sounding reference signal is 2. It should be understood that this is merely a specific implementation, and this is not limited in this embodiment of the present invention.

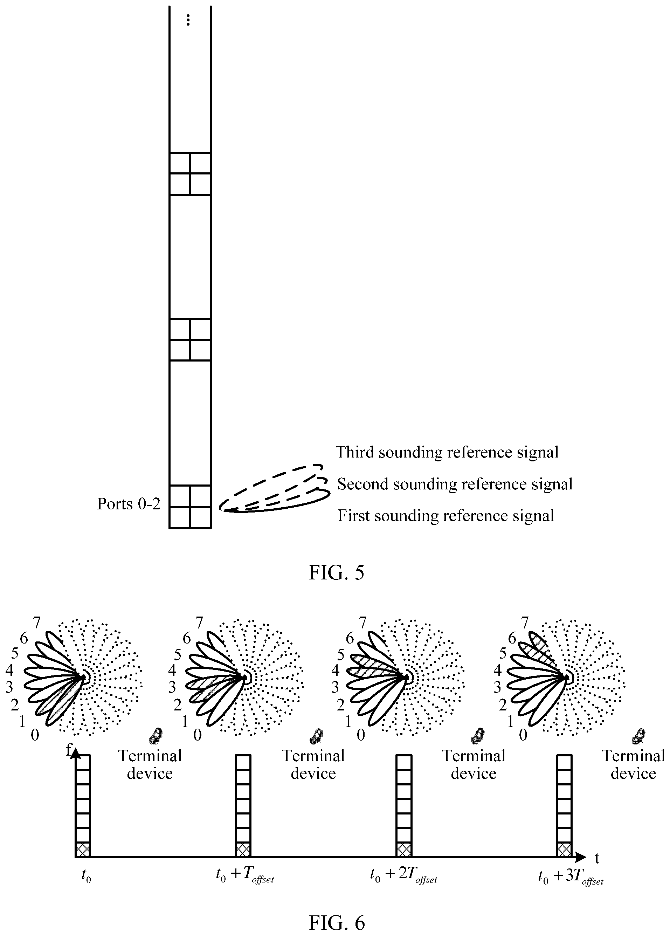

FIG. 5 is a schematic diagram of sending sounding reference signals by occupying different ports according to an embodiment of the present invention. In FIG. 5, the network device may instruct the terminal device to send the first sounding reference signal, the second sounding reference signal, and the third sounding reference signal by respectively occupying a port 0, a port 1, and a port 2. Therefore, the identifier of the port in the configuration information of the first sounding reference signal is 0, an identifier of a port in the configuration information of the second sounding reference signal is 1, and an identifier of a port in the configuration information of the third sounding reference signal is 2. It should be understood that this is merely a specific implementation, and this is not limited in this embodiment of the present invention.

In an optional embodiment, the beam configuration parameter of the first sounding reference signal further includes an identifier of a precoding codebook of the first sounding reference signal; and
the sending, by the terminal device based on the configuration information of the first sounding reference signal, the first sounding reference signal by using the first beam includes:
encoding, by the terminal device, the first sounding reference signal based on the identifier of the precoding codebook by using the precoding codebook, and sending the encoded first sounding reference signal by using the first beam.

Specifically, it should be understood that the objective of the precoding is to reduce implementation complexity of canceling impact between channels at a receive end, reduce system overheads, and improve a system capacity to the maximum extent. Certainly, canceling impact between a plurality of channels may be implemented at a receive end side. Alternatively, canceling impact between a plurality of channels may be implemented by changing a transmit manner of a transmit end. A transmit signal is pre-processed to assist the receive end in canceling the impact between the channels. The transmit manner is changed through the precoding. Specifically, the transmit end may include M transmit antennas, the receive end includes N receive antennas, and channels between the transmit antenna and the receive antenna may be represented by using a channel matrix. In addition, a precoding matrix needs a codebook serving as a precoding matrix. The codebook is selected, by using a precoding algorithm that enables particular performance of the system to be optimum and based on channel information estimated by the receive end, from a codebook set including a plurality of codebooks that is stipulated in a protocol. The receive end and the transmit end may share a same known codebook set. The codebook set includes a plurality of precoding matrices. The receive end selects a precoding matrix that enables performance of the system to be optimum from the codebook set based on a channel matrix obtained through channel estimation and a particular performance objective, and then feeds back a codebook identifier of the precoding matrix to the transmit end. The transmit end may select, based on the codebook identifier, the precoding matrix for precoding. In this manner, only the codebook identifier of the precoding matrix needs to be sent, thereby greatly reducing signaling overheads, saving a bandwidth, and facilitating an actual operation.

In an optional embodiment, the configuration information of the first sounding reference signal further includes a frequency domain configuration parameter of the first sounding reference signal and/or a time domain configuration parameter of the first sounding reference signal; the frequency domain configuration parameter of the first sounding reference signal includes at least one of a frequency domain start location of the first sounding reference signal, a frequency domain offset between neighboring sounding reference signals in frequency domain, and a bandwidth occupied by the first sounding reference signal in the frequency domain; and the time domain configuration parameter of the first sounding reference signal includes at least one of a time domain start location of the first sounding reference signal, a time domain offset between neighboring sounding reference signals in time domain, and a sending period of the first sounding reference signal.

It should be understood that the frequency domain start location and/or the time domain start location herein is used to configure a resource block used by the terminal device when the terminal device sends the first sounding reference signal. The time domain start location may be a time domain start subframe or a symbol identifier. The foregoing frequency domain start location and/or the time domain start location is an actual location of a resource block by using which the sounding reference signal is sent. In a specific implementation, the frequency domain start location may be calculated by using a frequency domain start location indicated by the network device and a frequency domain offset. The time domain start location may be calculated by using a time domain start location indicated by the network device and a time domain offset. This is not limited in this embodiment of the present invention.

In addition, the frequency domain offset and/or the time domain offset is used to configure a resource block used by the terminal device to send another beam after the terminal device obtains the beam pattern, and is used to indicate an offset between neighboring sounding reference signals in the frequency domain and/or the time domain.

Based on different configurations of the network device, the terminal device may send the sounding reference signal in a time division manner, or may send the sounding reference signal in a frequency division manner, or may send the sounding reference signal in a manner of mixing time division and frequency division.

In a specific embodiment, if rank information of a channel is 8 and a sending direction of each sounding reference signal of the terminal device represents one-dimensional rank information, to obtain information about all channels, the network device needs to configure the terminal device to respectively send eight sounding reference signals in eight directions. Specifically, the terminal device may send the sounding reference signal in the following three manners based on indication of the network device.

FIG. 6 is a schematic diagram of sending a sounding reference signal in a time division manner according to an embodiment of the present invention. Based on a configuration of the network device, the terminal device sends two sounding reference signals by using a beam 0 and a beam 1 at a moment *t*₀, the terminal device sends two sounding reference signal by using a beam 2 and a beam 3 at a moment *t*₀ + *T_{offset}*, the terminal device sends two sounding reference signals by using a beam 4 and a beam 5 at a moment *t*₀ + 2*T_{offset}*, and the terminal device sends two sounding reference signals by using a beam 6 and a beam 7 at a moment *t*₀ + 3*T_{offset}* . *T_{offset}* herein is a time domain offset configured by the network device for the terminal device. That is, in the time division sending manner, the foregoing eight sounding reference signals may respectively occupy different time domain resources, but occupy a same frequency domain resource.

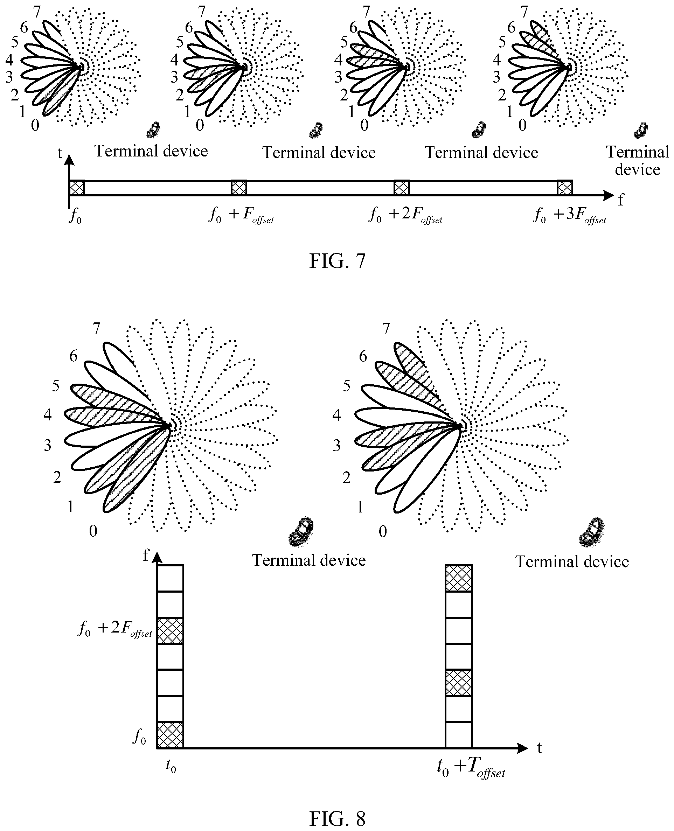

FIG. 7 is a schematic diagram of sending a sounding reference signal in a frequency division manner according to an embodiment of the present invention. Based on a configuration of the network device, the terminal device sends two sounding reference signals by using a beam 0 and a beam 1 in a frequency domain resource whose frequency is *f*₀, the terminal device sends two sounding reference signal by using a beam 2 and a beam 3 in a frequency domain resource whose frequency is *f₀* + *F_{offset}* , the terminal device sends two sounding reference signals by using a beam 4 and a beam 5 in a frequency domain resource whose frequency is *f₀* + 2*F_{offset},* and the terminal device sends two sounding reference signals by using a beam 6 and a beam 7 in a frequency domain resource whose frequency is *f₀* + 3*F_{offset} . F_{offset}* herein is a frequency domain offset configured by the network device for the terminal device. That is, in the frequency division sending manner, the foregoing eight sounding reference signals may respectively occupy different frequency domain resources, but occupy a same time domain resource.

FIG. 8 is a schematic diagram of sending a sounding reference signal in a manner of mixing time division and frequency division according to an embodiment of the present invention. Based on a configuration of the network device, the terminal device sends four sounding reference signals by using a beam 0, a beam 1, a beam 4, and a beam 5 at a moment *t*₀. The terminal device sends two sounding reference signals by using the beam 0 and the beam 1 in a frequency domain resource whose frequency is *f*₀, and the terminal device sends the other two sounding reference signals by using the beam 4 and the beam 5 in a frequency domain resource whose frequency is *f*₀ + 2*F_{offset}.* The terminal device sends four sounding reference signals by using a beam 2, a beam 3, a beam 6, and a beam 7 at a moment *t*₀ + *T_{offset}*. The terminal device sends two sounding reference signals by using the beam 2 and the beam 3 in a frequency domain resource whose frequency is *f*₀ + *F_{offset},* and the terminal device sends the other two sounding reference signals by using the beam 6 and the beam 7 in a frequency domain resource whose frequency is *f₀* + 3*F_{offset}.* That is, in the sending manner of mixing time division and frequency division, the foregoing eight sounding reference signals may respectively occupy different frequency domain resources and different time domain resources. It should be understood that the foregoing time frequency resource occupancy manners are merely examples for description, and this embodiment of the present invention is not limited thereto.

It should be understood that for the foregoing three sending manners, a quantity of transmit beams is 2. The quantity of transmit beams may be determined by the terminal device based on a capability of the terminal device, or may be configured by the network device for the terminal device. If the network device does not configure the quantity of transmit beams for the terminal device, and the capability of the terminal device is sufficient to send all beams in a same time frequency resource, the terminal device may directly send the eight sounding reference signals by using the foregoing beam 0 to the beam 7, so that quality of all channels is measured. This is not limited in this embodiment of the present invention.

In an optional embodiment, the configuration information of the first sounding reference signal further includes an identifier of an antenna panel used by the first sounding reference signal; and
the sending, by the terminal device based on the configuration information of the first sounding reference signal, the first sounding reference signal by using the first beam includes:
sending, by the terminal device, the first sounding reference signal based on the identifier of the antenna panel and the configuration information of the first sounding reference signal by using the antenna panel and the first beam.

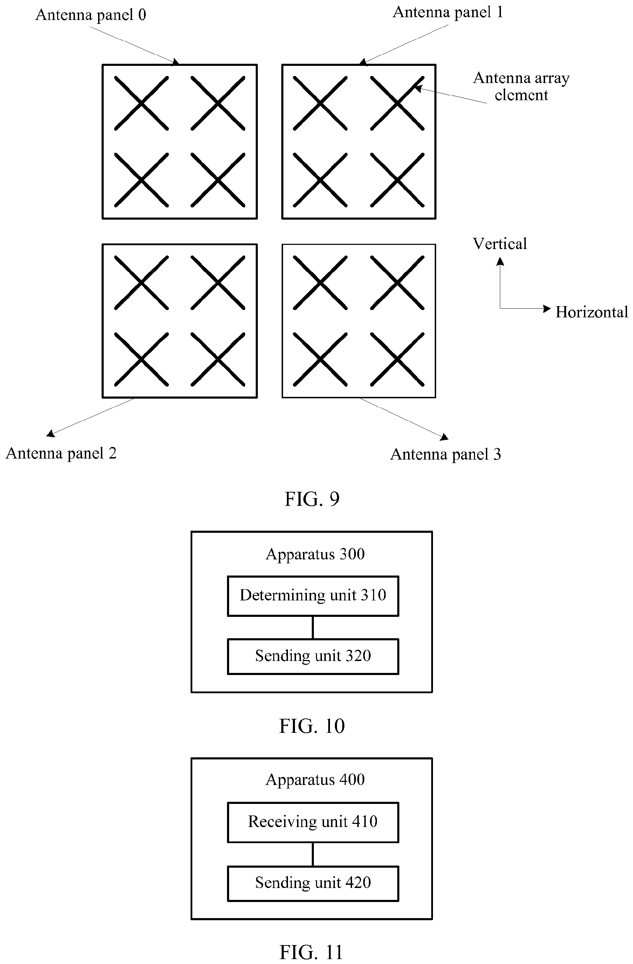

Specifically, the network device and the terminal device may agree on at least one antenna panel and an identifier of each antenna panel in advance. When sending the configuration information of the sounding reference signal, the network device may send the identifier of the antenna panel to the terminal device, to indicate the antenna panel specifically used by the terminal device when the terminal device sends the sounding reference signal. FIG. 9 is a schematic diagram of an antenna panel. As shown in FIG. 9, it is assumed that there are four antenna panels, and identifiers of the four antenna panels are respectively 0, 1, 2, and 3. Therefore, the network device only needs to send the identifier of the antenna panel to the terminal device, so that the terminal device may send the sounding reference signal by using an antenna on the corresponding antenna panel.

It should be understood that sequence numbers of the foregoing processes do not mean an execution sequence, and the execution sequence of the processes should be determined based on functions and internal logic of the processes, and should not be construed as any limitation to the implementation processes of the embodiments of the present invention.

The method for sending a sounding reference signal according to the embodiments of the present invention is described above in detail with reference to FIG. 1 to FIG. 9, and apparatuses for sending a sounding reference signal according to embodiments of the present invention are described below in detail with reference to FIG. 10 to FIG. 13.

FIG. 10 shows an apparatus 300 for sending a sounding reference signal according to an embodiment of the present invention. The apparatus 300 includes:
a determining unit 310, configured to determine configuration information of a first sounding reference signal, where the configuration information of the first sounding reference signal includes a beam configuration parameter of the first sounding reference signal, and the beam configuration parameter of the first sounding reference signal is used to instruct a terminal device to send the first sounding reference signal by using a first beam; and
a sending unit 320, configured to send the configuration information of the first sounding reference signal to the terminal device.

Therefore, according to the apparatus for sending a sounding reference signal in this embodiment of the present invention, the network device sends the configuration information including a beam-related parameter of the first sounding reference signal to the terminal device, so that the terminal device sends the first sounding reference signal directly based on the configuration information by using the first beam, thereby implementing sending the first sounding reference signal based on beamforming. Therefore, coverage performance of the sounding reference signal can be effectively improved, and interference between neighboring cells can be reduced, thereby improving user experience.

Optionally, the sending unit 320 is further configured to send configuration information of each of at least one second sounding reference signal to the terminal device. The configuration information of each second sounding reference signal includes a beam configuration parameter of the second sounding reference signal, the beam configuration parameter of the second sounding reference signal is used to instruct the terminal device to send the second sounding reference signal by using a second beam corresponding to the second sounding reference signal, and the at least one second sounding reference signal and at least one second beam are in a one-to-one correspondence.

Optionally, the sending unit 320 is further configured to send an identifier of a beam pattern to the terminal device. The identifier of the beam pattern is used to instruct the terminal device to send at least one third sounding reference signal by using at least one third beam in the beam pattern, and the at least one third sounding reference signal and the at least one third beam are in a one-to-one correspondence.

Optionally, the sending unit 320 is further configured to send beam quantity indication information to the terminal device. The beam quantity indication information is used to indicate a quantity of the third beams in the beam pattern that are used by the terminal device.

Optionally, the determining unit 310 is further configured to: before determining the configuration information of the first sounding reference signal, determine the first beam based on a moving direction of the terminal device.

Optionally, the beam configuration parameter of the first sounding reference signal includes an identifier of a first resource that the first sounding reference signal occupies and/or an identifier of a first port that the first sounding reference signal occupies, and the first resource and/or the first port corresponds to the first beam.

Optionally, the beam configuration parameter of the first sounding reference signal further includes: an identifier of a precoding codebook of the first sounding reference signal.

Optionally, the configuration information of the first sounding reference signal further includes a frequency domain configuration parameter of the first sounding reference signal and/or a time domain configuration parameter of the first sounding reference signal; the frequency domain configuration parameter of the first sounding reference signal includes at least one of a frequency domain start location of the first sounding reference signal, a frequency domain offset between neighboring sounding reference signals in frequency domain, and a bandwidth occupied by the first sounding reference signal in the frequency domain; and the time domain configuration parameter of the first sounding reference signal includes at least one of a time domain start location of the first sounding reference signal, a time domain offset between neighboring sounding reference signals in time domain, and a sending period of the first sounding reference signal.

Optionally, the configuration information of the first sounding reference signal further includes an identifier of an antenna panel used by the first sounding reference signal.

It should be understood that the apparatus 300 herein is embodied in a form of a functional unit. The term "unit" herein may refer to an application-specific integrated circuit (Application Specific Integrated Circuit, ASIC), an electronic circuit, a processor configured to perform one or more software or firmware programs (for example, a shared processor, a dedicated processor, or a group processor) and a memory, a combinational logic circuit, and/or another appropriate component supporting the described function. In an optional example, a person skilled in the art may understand that the apparatus 300 may be specifically the network device in the foregoing embodiments, and the apparatus 300 may be configured to perform the procedures and/or the steps corresponding to the network device in the foregoing method embodiments. To avoid repetition, details are not described herein again.

FIG. 11 shows an apparatus 400 for sending a sounding reference signal according to an embodiment of the present invention. The apparatus 400 includes:
a receiving unit 410, configured to receive configuration information of a first sounding reference signal that is sent by a network device, where the configuration information of the first sounding reference signal includes a beam configuration parameter of the first sounding reference signal, and the beam configuration parameter of the first sounding reference signal is used to instruct the apparatus to send the first sounding reference signal by using a first beam; and
a sending unit 420, configured to send the first sounding reference signal based on the configuration information of the first sounding reference signal by using the first beam.

Therefore, according to the apparatus for sending a sounding reference signal in this embodiment of the present invention, the network device sends the configuration information including a beam-related parameter of the first sounding reference signal to the terminal device, so that the terminal device sends the first sounding reference signal directly based on the configuration information by using the first beam, thereby implementing sending the first sounding reference signal based on beamforming. Therefore, coverage performance of the sounding reference signal can be effectively improved, and interference between neighboring cells can be reduced, thereby improving user experience.

Optionally, the receiving unit 410 is further configured to receive configuration information of each of at least one second sounding reference signal that is sent by the network device. The configuration information of each second sounding reference signal includes a beam configuration parameter of the second sounding reference signal, the beam configuration parameter of the second sounding reference signal is used to instruct the apparatus to send the second sounding reference signal by using a second beam corresponding to the second sounding reference signal, and the at least one second sounding reference signal and at least one second beam are in a one-to-one correspondence. The sending unit 420 is further configured to send the at least one second sounding reference signal based on the configuration information of the second sounding reference signal by using the at least one second beam.

Optionally, the receiving unit 410 is further configured to receive an identifier of a beam pattern that is sent by the network device, the identifier of the beam pattern is used to instruct the apparatus to send at least one third sounding reference signal by using at least one third beam in the beam pattern, and the at least one third sounding reference signal and the at least one third beam are in a one-to-one correspondence. The apparatus further includes a determining unit, configured to determine the at least one third beam based on the identifier of the beam pattern. The sending unit 420 is further configured to send the at least one third sounding reference signal based on the configuration information of the first sounding reference signal by using the at least one third beam.

Optionally, the receiving unit 410 is further configured to: before sending the at least one third sounding reference signal based on the configuration information of the first sounding reference signal by using the at least one third beam, receive beam quantity indication information sent by the network device. The beam quantity indication information is used to indicate a quantity of the third beams in the beam pattern that are used by the apparatus. The sending unit 420 is specifically configured to send the quantity of third sounding reference signals based on the configuration information of the first sounding reference signal and the beam quantity indication information by using the quantity of the third beams.

Optionally, the beam configuration parameter of the first sounding reference signal includes an identifier of a first resource that the first sounding reference signal occupies and/or an identifier of a first port that the first sounding reference signal occupies, and the first resource and/or the first port corresponds to the first beam. The sending unit 420 is specifically configured to send the first sounding reference signal based on the identifier of the first resource and/or the identifier of the first port by using the first resource and/or the first port.

Optionally, the beam configuration parameter of the first sounding reference signal further includes an identifier of a precoding codebook of the first sounding reference signal. The sending unit 420 is specifically configured to: encode the first sounding reference signal based on the identifier of the precoding codebook by using the precoding codebook, and send the encoded first sounding reference signal by using the first beam.

Optionally, the configuration information of the first sounding reference signal further includes a frequency domain configuration parameter of the first sounding reference signal and/or a time domain configuration parameter of the first sounding reference signal; the frequency domain configuration parameter of the first sounding reference signal includes at least one of a frequency domain start location of the first sounding reference signal, a frequency domain offset between neighboring sounding reference signals in frequency domain, and a bandwidth occupied by the first sounding reference signal in the frequency domain; and the time domain configuration parameter of the first sounding reference signal includes at least one of a time domain start location of the first sounding reference signal, a time domain offset between neighboring sounding reference signals in time domain, and a sending period of the first sounding reference signal.

Optionally, the configuration information of the first sounding reference signal further includes an identifier of an antenna panel used by the first sounding reference signal. The sending unit 420 is specifically configured to send the first sounding reference signal based on the identifier of the antenna panel and the configuration information of the first sounding reference signal by using the antenna panel and the first beam.

It should be understood that the apparatus 400 herein is embodied in a form of a functional unit. The term "unit" herein may refer to an application-specific integrated circuit (Application Specific Integrated Circuit, ASIC), an electronic circuit, a processor configured to perform one or more software or firmware programs (for example, a shared processor, a dedicated processor, or a group processor) and a memory, a combinational logic circuit, and/or another appropriate component supporting the described function. In an optional example, a person skilled in the art may understand that the apparatus 400 may be specifically the terminal device in the foregoing embodiments, and the apparatus 400 may be configured to perform the procedures and/or the steps corresponding to the terminal device in the foregoing method embodiments. To avoid repetition, details are not described herein again.

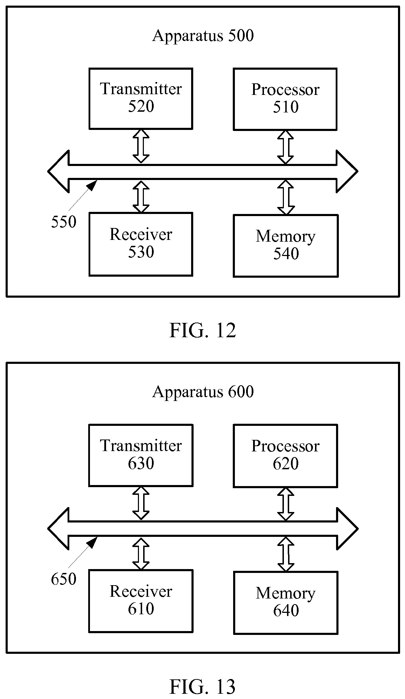

FIG. 12 shows an apparatus 500 for sending a sounding reference signal according to an embodiment of the present invention. The apparatus 500 includes a processor 510, a transmitter 520, a receiver 530, a memory 540, and a bus system 550. The processor 510, the transmitter 520, the receiver 530, and the memory 540 are connected by using the bus system 550. The memory 540 is configured to store an instruction. The processor 510 is configured to execute the instruction stored in the memory 540, to control the transmitter 520 to send a signal and control the receiver 530 to receive a signal.

The processor 510 is configured to determine configuration information of a first sounding reference signal. The configuration information of the first sounding reference signal includes a beam configuration parameter of the first sounding reference signal, and the beam configuration parameter of the first sounding reference signal is used to instruct a terminal device to send the first sounding reference signal by using a first beam.

The transmitter 520 is configured to send the configuration information of the first sounding reference signal to the terminal device.

It should be understood that the apparatus 500 may be specifically the network device in the foregoing embodiments, and may be configured to perform the steps and/or the procedures corresponding to the network device in the foregoing method embodiments. Optionally, the memory 540 may include a read-only memory and a random access memory, and provide an instruction and data to the processor. A part of the memory may further include a non-volatile random access memory. For example, the memory may further store information about a device type. The processor 510 may be configured to execute the instruction stored in the memory, and when the processor executes the instruction stored in the memory, the processor is configured to perform the steps and/or the procedures in the foregoing method embodiments.

FIG. 13 shows an apparatus 600 for sending a sounding reference signal according to an embodiment of the present invention. The apparatus 600 includes a receiver 610, a processor 620, a transmitter 630, a memory 640, and a bus system 650. The receiver 610, the processor 620, the transmitter 630, and the memory 640 are connected by using the bus system 650. The memory 640 is configured to store an instruction. The processor 620 is configured to execute the instruction stored in the memory 640, to control the receiver 610 to receive a signal and control the transmitter 630 to send a signal.

The receiver 610 is configured to receive configuration information of a first sounding reference signal that is sent by a network device. The configuration information of the first sounding reference signal includes a beam configuration parameter of the first sounding reference signal, and the beam configuration parameter of the first sounding reference signal is used to instruct a terminal device to send the first sounding reference signal by using a first beam.

The transmitter 630 is configured to send the first sounding reference signal based on the configuration information of the first sounding reference signal by using the first beam.

It should be understood that the apparatus 600 may be specifically the terminal device in the foregoing embodiments, and may be configured to perform the steps and/or the procedures corresponding to the terminal device in the foregoing method embodiments. Optionally, the memory 640 may include a read-only memory and a random access memory, and provide an instruction and data to the processor. A part of the memory may further include a non-volatile random access memory. For example, the memory may further store information about a device type. The processor 620 may be configured to execute the instruction stored in the memory, and when the processor executes the instruction, the processor may perform the steps and/or the procedures corresponding to the terminal device in the foregoing method embodiments.

It should be understood that in the embodiments of the present invention, the processor may be a central processing unit (Central Processing Unit, CPU), or may be another general purpose processor, a digital signal processor (DSP), an application-specific integrated circuit (ASIC), a field programmable gate array (FPGA) or another programmable logic device, a discrete gate, a transistor logic device, a discrete hardware component, or the like. The general purpose processor may be a microprocessor or the processor may be any conventional processor, or the like.

In an implementation process, all the steps of the foregoing methods may be implemented by using an integrated logical circuit of hardware in the processor or an instruction in a form of software. The steps of the methods disclosed with reference to the embodiments of the present invention may be implemented by using a hardware processor, or may be implemented by using a combination of the hardware and software modules in the processor. The software module may be located in a mature storage medium such as a random access memory, a flash memory, a read-only memory, a programmable read-only memory, an electrically-erasable programmable memory, or a register in the field. The storage medium is located in the memory, and the processor executes the instruction in the memory and implements the steps in the foregoing methods in combination with the hardware of the processor. To avoid repetition, details are not described herein again.

A person of ordinary skill in the art may be aware that, in combination with the method steps and the units that are described in the embodiments disclosed in this specification, the present invention may be implemented by using electronic hardware, computer software, or a combination thereof. To clearly describe interchangeability between the hardware and the software, the steps and compositions of each embodiment have been generally described based on functions in the foregoing descriptions. Whether the functions are performed by using hardware or software depends on particular applications and design constraint conditions of the technical solutions. A person of ordinary skill in the art may use different methods to implement the described functions for each particular application, but it should not be considered that the implementation goes beyond the scope of the present invention.

A person skilled in the art may clearly understand that, for the purpose of convenient and brief description, for a detailed working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing described apparatus embodiments are merely examples. For example, the unit division is merely logical function division and may be other division during actual implementation. For example, a plurality of units or components may be combined or integrated into another system, or some features may be ignored or not be performed. In addition, the displayed or discussed mutual couplings or direct couplings or communication connections may be implemented by using some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objective of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of the present invention essentially, or the part contributing to the prior art, or all or some of the technical solutions may be implemented in the form of a software product. The software product is stored in a storage medium and includes several instructions for enabling a computer device (which may be a personal computer, a server, a network device, or the like) to perform all or some of the steps of the methods described in the embodiments of the present invention. The foregoing storage medium includes any medium that can store program code, for example, a USB flash drive, a removable hard disk, a read-only memory (Read-Only Memory, "ROM" for short), a random access memory (Random Access Memory, "RAM" for short), a magnetic disk, or an optical disc.

The foregoing descriptions are merely specific embodiments of the present invention, but are not intended to limit the protection scope of the present invention. The scope of the invention is defined in the appended claims.

## Claims

1. A method for sending a sounding reference signal, comprising:
determining (S210), by a network device, configuration information of a first sounding reference signal, wherein the configuration information of the first sounding reference signal comprises a beam configuration parameter of the first sounding reference signal, and the beam configuration parameter of the first sounding reference signal is used to instruct a terminal device to send the first sounding reference signal by using a first beam; and
sending (S220), by the network device, the configuration information of the first sounding reference signal to the terminal device;
**characterized in that**:
before the determining, by a network device, configuration information of a first sounding reference signal, the method further comprises:
determining, by the network device, the first beam and the identifier of the beam pattern based on a moving direction of the terminal device

2. The method according to claim 1, wherein the method further comprises:
sending, by the network device, configuration information of each of at least one second sounding reference signal to the terminal device, wherein the configuration information of each second sounding reference signal comprises a beam configuration parameter of the second sounding reference signal, the beam configuration parameter of the second sounding reference signal is used to instruct the terminal device to send the second sounding reference signal by using a second beam corresponding to the second sounding reference signal, and the at least one second sounding reference signal and at least one second beam are in a one-to-one correspondence.

3. The method according to claim 1, wherein the method further comprises:
sending, by the network device, an identifier of a beam pattern to the terminal device, wherein the identifier of the beam pattern is used to instruct the terminal device to send at least one third sounding reference signal by using at least one third beam in the beam pattern, and the at least one third sounding reference signal and the at least one third beam are in a one-to-one correspondence.

4. The method according to claim 3, wherein the method further comprises:
sending, by the network device, beam quantity indication information to the terminal device, wherein the beam quantity indication information is used to indicate a quantity of the third beams in the beam pattern that are used by the terminal device.

5. The method according to any one of claims 1 to 4, wherein the beam configuration parameter of the first sounding reference signal comprises:
an identifier of a first resource that the first sounding reference signal occupies and/or an identifier of a first port that the first sounding reference signal occupies, and the first resource and/or the first port corresponds to the first beam.

6. The method according to any one of claims 1 to 5, wherein the beam configuration parameter of the first sounding reference signal further comprises:
an identifier of a precoding codebook of the first sounding reference signal.

7. The method according to any one of claims 1 to 6, wherein the configuration information of the first sounding reference signal further comprises:
a frequency domain configuration parameter of the first sounding reference signal and/or a time domain configuration parameter of the first sounding reference signal;
the frequency domain configuration parameter of the first sounding reference signal comprises at least one of a frequency domain start location of the first sounding reference signal, a frequency domain offset between neighboring sounding reference signals in frequency domain, and a bandwidth occupied by the first sounding reference signal in the frequency domain; and
the time domain configuration parameter of the first sounding reference signal comprises at least one of a time domain start location of the first sounding reference signal, a time domain offset between neighboring sounding reference signals in time domain, and a sending period of the first sounding reference signal.

8. The method according to any one of claims 1 to 7, wherein the configuration information of the first sounding reference signal further comprises:
an identifier of an antenna panel used by the first sounding reference signal.

9. A network device (300) for sending a sounding reference signal, comprising:
a determining unit (310), configured to determine configuration information of a first sounding reference signal, wherein the configuration information of the first sounding reference signal comprises a beam configuration parameter of the first sounding reference signal, and the beam configuration parameter of the first sounding reference signal is used to instruct a terminal device to send the first sounding reference signal by using a first beam; and
a sending unit (320), configured to send the configuration information of the first sounding reference signal to the terminal device;
**characterized in that**:
the determining unit (310) is further configured to:
before determining the configuration information of the first sounding reference signal, determine the first beam and the identifier of the beam pattern based on a moving direction of the terminal device.

10. The network device (300) according to claim 9, wherein the sending unit (320) is further configured to:
send configuration information of each of at least one second sounding reference signal to the terminal device, wherein the configuration information of each second sounding reference signal comprises a beam configuration parameter of the second sounding reference signal, the beam configuration parameter of the second sounding reference signal is used to instruct the terminal device to send the second sounding reference signal by using a second beam corresponding to the second sounding reference signal, and the at least one second sounding reference signal and at least one second beam are in a one-to-one correspondence.

11. The network device (300) according to claim 9, wherein the sending unit (320) is further configured to:
send an identifier of a beam pattern to the terminal device, wherein the identifier of the beam pattern is used to instruct the terminal device to send at least one third sounding reference signal by using at least one third beam in the beam pattern, and the at least one third sounding reference signal and the at least one third beam are in a one-to-one correspondence.

12. The network device (300) according to claim 11, wherein the sending unit (320) is further configured to:
send beam quantity indication information to the terminal device, wherein the beam quantity indication information is used to indicate a quantity of the third beams in the beam pattern that are used by the terminal device.

13. The network device (300) according to any one of claims 9 to 12, wherein the beam configuration parameter of the first sounding reference signal comprises:
an identifier of a first resource that the first sounding reference signal occupies and/or an identifier of a first port that the first sounding reference signal occupies, and the first resource and/or the first port corresponds to the first beam.

## Patentansprüche

1. Verfahren zum Senden eines Sondierungs-Referenzsignals, Folgendes umfassend:
Bestimmen (S210), durch ein Netzwerkgerät, von Konfigurationsinformationen eines ersten Sondierungs-Referenzsignals, wobei die Konfigurationsinformationen des ersten Sondierungs-Referenzsignals einen Strahlkonfigurationsparameter des ersten Sondierungs-Referenzsignals umfassen und der Strahlkonfigurationsparameter des ersten Sondierungs-Referenzsignals verwendet wird, um ein Endgerät anzuweisen, das erste Sondierungs-Referenzsignal unter Verwendung eines ersten Strahls zu senden; und
Senden (S220), durch ein Netzwerkgerät, der Konfigurationsinformationen des ersten Sondierungs-Referenzsignals an das Endgerät;
**dadurch gekennzeichnet, dass**:
vordem Bestimmen, durch ein Netzwerkgerät, von Konfigurationsinformationen eines ersten Sondierungs-Referenzsignals das Verfahren außerdem Folgendes umfasst:
Bestimmen, durch ein Netzwerkgerät, des ersten Strahls und der Kennung des Strahlmusters, basierend auf einer Bewegungsrichtung des Endgeräts.

2. Verfahren nach Anspruch 1, wobei das Verfahren ferner Folgendes umfasst:
Senden, durch das Netzwerkgerät, von Konfigurationsinformationen von jedem von mindestens einem zweiten Sondierungs-Referenzsignal an das Endgerät, wobei die Konfigurationsinformationen von jedem zweiten Sondierungs-Referenzsignal einen Strahlkonfigurationsparameter des zweiten Sondierungs-Referenzsignals umfassen, und der Strahlkonfigurationsparameter des zweiten Sondierungs-Referenzsignals verwendet wird, um das Endgerät anzuweisen, das zweite Sondierungs-Referenzsignal unter Verwendung eines zweiten Strahls, der dem zweiten Sondierungs-Referenzsignal entspricht, zu senden, und das mindestens eine zweite Sondierungs-Referenzsignal und mindestens ein zweiter Strahl in einer Eins-zu-Eins-Entsprechung vorliegen.

3. Verfahren nach Anspruch 1, wobei das Verfahren ferner Folgendes umfasst:
Senden, durch das Netzwerkgerät, einer Kennung eines Strahlmusters an das Endgerät, wobei die Kennung des Strahlmusters verwendet wird, um das Endgerät anzuweisen, mindestens ein drittes Sondierungs-Referenzsignal zu senden, indem mindestens ein dritter Strahl im Strahlmuster verwendet wird, und das mindestens eine dritte Sondierungs-Referenzsignal und der mindestens eine dritte Strahl in einer Eins-zu-Eins-Entsprechung vorliegen.

4. Verfahren nach Anspruch 3, wobei das Verfahren ferner umfasst:
Senden, durch das Netzwerkgerät, von Informationen zur Anzeige der Strahlmenge an das Endgerät, wobei die Informationen zur Anzeige der Strahlmenge verwendet werden, um eine Menge der dritten Strahlen in dem Strahlmuster anzuzeigen, die vom Endgerät verwendet werden.

5. Verfahren nach einem der Ansprüche 1 bis 4, wobei der Strahlkonfigurationsparameter des ersten Sondierungs-Referenzsignals umfasst:
eine Kennung einer ersten Ressource, die das erste Sondierungs-Referenzsignal belegt, und/oder eine Kennung eines ersten Ports, den das erste Sondierungs-Referenzsignal belegt, und die erste Ressource und/oder der erste Port dem ersten Strahl entsprechen.

6. Verfahren nach einem der Ansprüche 1 bis 5, wobei der Strahlkonfigurationsparameter des ersten Sondierungs-Referenzsignals ferner umfasst:
eine Kennung eines Vorcodierer-Codebuchs des ersten Sondierungs-Referenzsignals.

7. Verfahren nach einem der Ansprüche 1 bis 6, wobei die Konfigurationsinformationen des ersten Sondierungs-Referenzsignals ferner umfassen:
einen Frequenzbereichs-Konfigurationsparameter des ersten Sondierungs-Referenzsignals und/oder einen Zeitbereichs-Konfigurationsparameter des ersten Sondierungs-Referenzsignals;
der Frequenzbereichs-Konfigurationsparameter des ersten Sondierungs-Referenzsignals umfasst mindestens einen Frequenzbereichsstartort des ersten Sondierungs-Referenzsignals, einen Frequenzbereichsversatz zwischen benachbarten Sondierungs-Referenzsignalen im Frequenzbereich und eine vom ersten Sondierungs-Referenzsignal belegte Bandbreite im Frequenzbereich; und
der Zeitbereichs-Konfigurationsparameter des ersten Sondierungs-Referenzsignals umfasst mindestens einen Zeitbereichsstartort des ersten Sondierungs-Referenzsignals, einen Zeitbereichsversatz zwischen benachbarten Sondierungs-Referenzsignalen im Zeitbereich und eine Sendeperiode der ersten Sondierungs-Referenzsignals.

8. Verfahren nach einem der Ansprüche 1 bis 7, wobei die Konfigurationsinformationen des ersten Sondierungs-Referenzsignals ferner umfassen:
eine Kennung eines Antennenfeldes, das vom ersten Sondierungs-Referenzsignal verwendet wird.

9. Netzwerkgerät (300) zum Senden eines Sondierungs-Referenzsignals, umfassend:
eine Bestimmungseinheit (310), die konfiguriert ist, um Konfigurationsinformationen eines ersten Sondierungs-Referenzsignals zu bestimmen, wobei die Konfigurationsinformationen des ersten Sondierungs-Referenzsignals einen Strahlkonfigurationsparameter des ersten Sondierungs-Referenzsignals umfassen und der Strahlkonfigurationsparameter des ersten Sondierungs-Referenzsignals verwendet wird, um ein Endgerät anzuweisen, das erste Sondierungs-Referenzsignal unter Verwendung eines ersten Strahls zu senden; und
eine Sendeeinheit (320), die konfiguriert ist, um die Konfigurationsinformationen des ersten Sondierungs-Referenzsignals an das Endgerät zu senden;
**dadurch gekennzeichnet, dass**:
die Bestimmungseinheit (310) ferner für Folgendes konfiguriert ist:
vor dem Bestimmen der Konfigurationsinformationen des ersten Sondierungs-Referenzsignals den ersten Strahl und die Kennung des Strahlmusters basierend auf einer Bewegungsrichtung des Endgeräts zu bestimmen.

10. Netzwerkgerät (300) nach Anspruch 9, wobei die Sendeeinheit (320) ferner konfiguriert ist, um:
Konfigurationsinformationen von jedem von mindestens einem zweiten Sondierungs-Referenzsignal an das Endgerät zu senden, wobei die Konfigurationsinformationen von jedem zweiten Sondierungs-Referenzsignal einen Strahlkonfigurationsparameter des zweiten Sondierungs-Referenzsignals umfassen, und der Strahlkonfigurationsparameter des zweiten Sondierungs-Referenzsignals verwendet wird, um das Endgerät anzuweisen, das zweite Sondierungs-Referenzsignal unter Verwendung eines zweiten Strahls, der dem zweiten Sondierungs-Referenzsignal entspricht, zu senden, und das mindestens eine zweite Sondierungs-Referenzsignal und mindestens ein zweiter Strahl in einer Eins-zu-Eins-Entsprechung vorliegen.

11. Netzwerkgerät (300) nach Anspruch 9, wobei die Sendeeinheit (320) ferner für Folgendes konfiguriert ist:
Senden einer Kennung eines Strahlmusters an das Endgerät, wobei die Kennung des Strahlmusters verwendet wird, um das Endgerät anzuweisen, mindestens ein drittes Sondierungs-Referenzsignal unter Verwendung mindestens eines dritten Strahls in dem Strahlmuster zu senden, und das mindestens eine dritte Sondierungs-Referenzsignal und der mindestens ein dritte Strahl in einer Eins-zu-Eins-Entsprechung vorliegen.

12. Netzwerkgerät (300) nach Anspruch 11, wobei die Sendeeinheit (320) ferner für Folgendes konfiguriert ist:
Senden von Informationen zur Anzeige der Strahlmenge an das Endgerät, wobei die Informationen zur Anzeige der Strahlmenge verwendet werden, um eine Menge der dritten Strahlen in dem Strahlmuster anzuzeigen, die vom Endgerät verwendet werden.

13. Netzwerkgerät (300) nach einem der Ansprüche 9 bis 12, wobei der Strahlkonfigurationsparameter des ersten Sondierungs-Referenzsignals umfassen:
eine Kennung einer ersten Ressource, die das erste Sondierungs-Referenzsignal belegt, und/oder eine Kennung eines ersten Ports, den das erste Sondierungs-Referenzsignal belegt, und die erste Ressource und/oder der erste Port dem ersten Strahl entsprechen.

## Revendications

1. Procédé d'envoi d'un signal de référence de sondage, comprenant :
la détermination (S210), par un dispositif réseau, d'informations de configuration d'un premier signal de référence de sondage, dans lequel les informations de configuration du premier signal de référence de sondage comprennent un paramètre de configuration de faisceau du premier signal de référence de sondage, et le paramètre de configuration de faisceau du premier signal de référence de sondage est utilisé pour ordonner à un dispositif terminal d'envoyer le premier signal de référence de sondage à l'aide d'un premier faisceau ; et
l'envoi (S220), par le dispositif réseau, d'informations de configuration du premier signal de référence de sondage au dispositif terminal ;
**caractérisé en ce que** :
avant la détermination, par un dispositif réseau, d'informations de configuration d'un premier signal de référence de sondage, le procédé comprend en outre :
la détermination, par le dispositif réseau, du premier faisceau et de l'identifiant du motif de faisceau sur la base d'une direction de déplacement du dispositif terminal

2. Procédé selon la revendication 1, dans lequel le procédé comprend en outre :
l'envoi, par le dispositif réseau, d'informations de configuration de chacun d'au moins un deuxième signal de référence de sondage au dispositif terminal, dans lequel les informations de configuration de chaque deuxième signal de référence de sondage comprennent un paramètre de configuration de faisceau du deuxième signal de référence de sondage, le paramètre de configuration de faisceau du deuxième signal de référence de sondage étant utilisé pour ordonner au dispositif terminal d'envoyer le deuxième signal de référence de sondage à l'aide d'un deuxième faisceau correspondant au deuxième signal de référence de sondage, et l'au moins un deuxième signal de référence de sondage et au moins un deuxième faisceau étant dans une correspondance biunivoque.

3. Procédé selon la revendication 1, dans lequel le procédé comprend en outre :
l'envoi, par le dispositif réseau, d'un identifiant d'un motif de faisceau au dispositif terminal, dans lequel l'identifiant du motif de faisceau est utilisé pour ordonner au dispositif terminal d'envoyer au moins un troisième signal de référence de sondage à l'aide d'au moins un troisième faisceau dans le motif de faisceau, et l'au moins un troisième signal de référence de sondage et l'au moins un troisième faisceau sont dans une correspondance biunivoque.

4. Procédé selon la revendication 3, dans lequel le procédé comprend en outre :
l'envoi, par le dispositif réseau, d'informations d'indication de quantité de faisceaux au dispositif terminal, dans lequel les informations d'indication de quantité de faisceaux sont utilisées pour indiquer une quantité des troisièmes faisceaux dans le motif de faisceau qui sont utilisés par le dispositif terminal.

5. Procédé selon l'une quelconque des revendications 1 à 4, dans lequel le paramètre de configuration de faisceau du premier signal de référence de sondage comprend :
un identifiant d'une première ressource qu'occupe le premier signal de référence de sondage et/ou un identifiant d'un premier port qu'occupe le premier signal de référence de sondage, et la première ressource et/ou le premier port correspond au premier faisceau.

6. Procédé selon l'une quelconque des revendications 1 à 5, dans lequel le paramètre de configuration de faisceau du premier signal de référence de sondage comprend en outre :
un identifiant d'un livre de codes de précodage du premier signal de référence de sondage.

7. Procédé selon l'une quelconque des revendications 1 à 6, dans lequel les informations de configuration du premier signal de référence de sondage comprennent en outre :
un paramètre de configuration de domaine fréquentiel du premier signal de référence de sondage et/ou un paramètre de configuration de domaine temporel du premier signal de référence de sondage ;
le paramètre de configuration de domaine fréquentiel du premier signal de référence de sondage comprend un emplacement de début de domaine fréquentiel du premier signal de référence de sondage, et/ou un décalage de domaine fréquentiel entre des signaux de référence de sondage voisins dans le domaine fréquentiel, et/ou une bande passante occupée par le premier signal de référence de sondage dans le domaine fréquentiel ; et
le paramètre de configuration de domaine temporel du premier signal de référence de sondage comprend un emplacement de début de domaine temporel du premier signal de référence de sondage, et/ou un décalage de domaine temporel entre des signaux de référence de sondage voisins dans le domaine temporel, et/ou une période d'envoi du premier signal de référence de sondage.

8. Procédé selon l'une quelconque des revendications 1 à 7, dans lequel les informations de configuration du premier signal de référence de sondage comprennent en outre :
un identifiant d'un panneau d'antenne utilisé par le premier signal de référence de sondage.

9. Dispositif réseau (300) d'envoi d'un signal de référence de sondage, comprenant :
une unité de détermination (310), configurée pour déterminer des informations de configuration d'un premier signal de référence de sondage, les informations de configuration du premier signal de référence de sondage comprenant un paramètre de configuration de faisceau du premier signal de référence de sondage, et le paramètre de configuration de faisceau du premier signal de référence de sondage étant utilisé pour ordonner à un dispositif terminal d'envoyer le premier signal de référence de sondage à l'aide d'un premier faisceau ; et
une unité d'envoi (320), configurée pour envoyer les informations de configuration du premier signal de référence de sondage au dispositif terminal ;
**caractérisé en ce que** :
l'unité de détermination (310) est en outre configurée pour :
avant de déterminer les informations de configuration du premier signal de référence de sondage, déterminer le premier faisceau et l'identifiant du motif de faisceau sur la base d'une direction de déplacement du dispositif terminal.

10. Dispositif réseau (300) selon la revendication 9, dans lequel l'unité d'envoi (320) est en outre configurée pour :
envoyer des informations de configuration de chacun d'au moins un deuxième signal de référence de sondage au dispositif terminal, dans lequel les informations de configuration de chaque deuxième signal de référence de sondage comprennent un paramètre de configuration de faisceau du deuxième signal de référence de sondage, le paramètre de configuration de faisceau du deuxième signal de référence de sondage est utilisé pour ordonner au dispositif terminal d'envoyer le deuxième signal de référence de sondage à l'aide d'un deuxième faisceau correspondant au deuxième signal de référence de sondage, et l'au moins un deuxième signal de référence de sondage et au moins un deuxième faisceau sont dans une correspondance biunivoque.

11. Dispositif réseau (300) selon la revendication 9, dans lequel l'unité d'envoi (320) est en outre configurée pour :
envoyer un identifiant d'un motif de faisceau au dispositif terminal, dans lequel l'identifiant du motif de faisceau est utilisé pour ordonner au dispositif terminal d'envoyer au moins un troisième signal de référence de sondage à l'aide d'au moins un troisième faisceau dans le motif de faisceau, et l'au moins un troisième signal de référence de sondage et l'au moins un troisième faisceau sont dans une correspondance biunivoque.

12. Dispositif réseau (300) selon la revendication 11, dans lequel l'unité d'envoi (320) est en outre configurée pour :
envoyer des informations d'indication de quantité de faisceaux au dispositif terminal, dans lequel les informations d'indication de quantité de faisceaux sont utilisées pour indiquer une quantité des troisièmes faisceaux dans le motif de faisceau qui sont utilisés par le dispositif terminal.

13. Dispositif réseau (300) selon l'une quelconque des revendications 9 à 12, dans lequel le paramètre de configuration de faisceau du premier signal de référence de sondage comprend :
un identifiant d'une première ressource qu'occupe le premier signal de référence de sondage et/ou un identifiant d'un premier port qu'occupe le premier signal de référence de sondage, et la première ressource et/ou le premier port correspond au premier faisceau.
